# EUROPEAN PATENT SPECIFICATION

(11) **EP 1 642 228 B1**
(45) Date of publication and mention of the grant of the patent: **10.04.2013**
(21) Application number: 04744377.5
(22) Date of filing: 22.06.2004
(51) Int. Cl.: G06K 19/07, G06K 19/073, G06K 7/00, G06K 7/10

(54) **METHOD OF MAKING AN INVENTORY OF TRANSPONDERS IN A COMMUNICATION STATION**
VERFAHREN ZUM INVENTARISIEREN VON TRANSPONDERN IN EINER KOMMUNIKATIONSSTATION
PROCEDE DE CREATION D'UN PARC DE TRANSPONDEURS DANS UNE STATION DE COMMUNICATION

(30) Priority: 25.06.2003 EP 03101881
(43) Date of publication of application: 05.04.2006
(73) Proprietor: NXP B.V., 5656 AG Eindhoven (NL)
(72) Inventor: AMTMANN, Franz, A-1101 Vienna (AT); CERNUSCA, Michael, A-1101 Vienna (AT); RAGGAM, Peter, A-1101 Vienna (AT); ZETTLER, Werner, A-1101 Vienna (AT)
(74) Representative: Schouten, Marcus Maria
(86) International application number: PCT/IB2004/050965
(87) International publication number: WO 2004/114206

(56) References cited:
- EP-A- 1 310 901
- WO-A-02/41650
- US-A- 5 539 394
- US-B1- 6 583 717

## Description

The invention relates to a method of placing a transponder or an integrated circuit contained in the transponder in an inventory in a communication station, wherein an inventory-making process is activated in the transponder or in its integrated circuit, in which inventory-making process a part of a distinguishing dataset of the transponder or its integrated circuit, which distinguishing dataset is stored in storage means of the transponder or its integrated circuit and is characteristic of the transponder or its integrated circuit, is read from the storage means by using a hash value, and in which inventory-making process a transmission parameter is selected from a set of transmission parameters by using the part that was read from the distinguishing dataset, and in which inventory-making process an identifying dataset for the transponder or its integrated circuit, which identifying dataset is characteristic of the transponder or its integrated circuit and is intended for the placing of the transponder or its integrated circuit in an inventory, is transmitted from the transponder or its integrated circuit to the communication station by using the selected transmission parameter.

The invention further relates to an integrated circuit for a transponder, which integrated circuit contains process-controlling means that are intended for controlling an inventory-making process for placing the integrated circuit or the transponder containing the integrated circuit in an inventory in a communication station, and which integrated circuit contains storage means that are intended firstly to store a distinguishing dataset of the integrated circuit or the transponder containing the integrated circuit, which distinguishing dataset is characteristic for the integrated circuit or the transponder containing the integrated circuit, and secondly to store an identifying dataset for the integrated circuit or the transponder containing the integrated circuit, which identifying dataset is characteristic for the integrated circuit or the transponder containing the integrated circuit and is intended for the placing of the integrated circuit or the transponder containing the integrated circuit in an inventory, and which integrated circuit contains transmission-parameter selecting means that are intended firstly to receive a part of the distinguishing dataset that is read from the storage means by using a hash value, and secondly to select a transmission parameter from a set of transmission parameters by using the part of the distinguishing dataset that has been received, which selected transmission parameter is suitable for transmitting, from the integrated circuit to the communication station, the identifying dataset that is intended for placing the integrated circuit or the transponder containing the integrated circuit in an inventory.

The invention further relates to a transponder having an integrated circuit of a design as specified in the second paragraph above.

A transponder having an integrated circuit of the design specified in the second paragraph above that is suitable for performing a method of the kind specified in the first paragraph above is known from patent document WO 2000/04485 A1. By the method for placing a transponder or an integrated circuit contained in a transponder in an inventory it is of course not just a single transponder of which an inventory is made in the normal course of operation but a plurality of transponders, namely all the transponders that are present in a communication zone of the communication station. There may be more than a hundred such transponders in this case. In the known design, a hash value generated in a communication station has to be transmitted to each transponder that is to be placed in an inventory in order to ensure that that the hash value is available in every transponder. The transmission of the hash value from the communication station to a transponder takes a certain amount of time, and this is reflected in a relatively long total transmission time for an inventory-making process. What is more, the transmission of the hash value from the communication station to a transponder calls for additional modulation steps that are determined by the data block representing the hash value. These modulation steps produce sidebands in the transmission frequency spectrum and these may give rise to problems with regard to rules laid down by the authorities, which is also undesirable. US-ß-6583717 is acknowledged in the preamble of claims 1 and 6.

It is an object of the invention to avoid the adverse circumstances outlined above and to provide an improved method for placing a transponder in an inventory and an improved integrated circuit and an improved transponder,

To allow the above object to be achieved, features according to the invention are provided in a method according to the invention, thus enabling a method according to the invention to be characterized in the manner stated below, namely:
A method of placing a transponder or an integrated circuit contained in the transponder in an inventory, wherein an inventory-making process is activated in the transponder or in its integrated circuit, in which inventory-making process a part of a distinguishing dataset of the transponder or its integrated circuit, which distinguishing dataset is stored in storage means of the transponder or its integrated circuit and is characteristic for the transponder or its integrated circuit, is read from the storage means by using a hash value, and in which inventory-making process a transmission parameter is selected from a set of transmission parameters by using the part that was read from the distinguishing dataset, and in which inventory-making process an identifying dataset for the transponder or its integrated circuit, which identifying dataset is characteristic for the transponder or its integrated circuit and is intended for the placing of the transponder or its integrated circuit in an inventory, is transmitted from the transponder or its integrated circuit to the communication station by using the selected transmission parameter, characterized in that the hash value is generated in the transponder or in its integrated circuit by means of hash-value generating means that are provided in the transponder or in its integrated circuit.

To allow the above object to be achieved, features according to the invention are provided in an integrated circuit for a transponder, thus enabling an integrated circuit according to the invention to be characterized in the manner stated below, namely:
An integrated circuit for a transponder, which integrated circuit contains process-controlling means that are intended for controlling an inventory-making process for placing the integrated circuit or the transponder containing the integrated circuit in an inventory in a communication station, and which integrated circuit contains storage means that are intended firstly to store a distinguishing dataset of the integrated circuit or the transponder containing the integrated circuit, which distinguishing dataset is characteristic for the integrated circuit or the transponder containing the integrated circuit, and secondly to store an identifying dataset of the integrated circuit or the transponder containing the integrated circuit, which identifying dataset is characteristic for the integrated circuit or the transponder containing the integrated circuit and is intended for placing the integrated circuit or the transponder containing the integrated circuit in an inventory, and which integrated circuit includes transmission-parameter selecting means that are intended firstly to receive a part of the distinguishing dataset that is read from the storage means by using the hash value, and secondly to select a transmission parameter from a set of transmission parameters by using the part of the distinguishing dataset that has been received, which selected transmission parameter is suitable for transmitting, from the integrated circuit to the communication station, the identifying dataset that is intended for placing the integrated circuit or the transponder containing the integrated circuit in an inventory, characterized in that hash-value generating means for generating the hash value are provided in the integrated circuit.

To allow the above object to be achieved, a transponder according to the invention is fitted with an integrated circuit according to the invention.

What is achieved by the provision of the features according to the invention, in a simple way in terms of circuitry and at only a small extra cost per transponder, is that the hash value required in the transponder for placing the transponder in an inventory is generated directly in the transponder itself, which means that there is no need for the hash value to be transmitted from the communication station to the transponder. What is achieved in this way is that the total transmission time for an inventory-making process for placing a transponder according to the invention in an inventory is shorter than the total transmission time in the prior art solutions. What is more, it is possible to manage with fewer modulation steps, which results in smaller sidebands than in the prior art solutions.

With regard to the activation of the inventory-making process in a transponder according to the invention, it should be mentioned that this activation is advantageously performed by means of a command transmitted from the communication station to the transponder. Provision may, however, also be made for the activation of the inventory-making process to be performed as a result of a transponder according to the invention being brought into the communication zone of the communication station, in which case the inventory-making process is then activated by an electromagnetic field prevailing in this communication zone.

With regard to the distinguishing dataset characteristic for a transponder according to the invention that is stored in a memory of the transponder, it should be mentioned that this distinguishing dataset is preferably the serial number of the transponder. The distinguishing dataset may, however, also be a so-called user dataset.

With regard to the identifying dataset that is characteristic for a transponder according to the invention and that is intending for the placing of the transponder in an inventory, it should be mentioned that this identifying dataset is preferably the same as the distinguishing dataset. The identifying dataset and the distinguishing dataset may, however, also be different than one another.

In the solutions according to the invention, a set of transmission parameters may comprise a certain number of types of coding that differ in respect of their coding rules. A set of transmission parameters may also comprise a certain number of secondary carrier-signals that differ in respect of their frequencies. In this connection, reference may, for example, be made to two patent documents WO 2003/042,914A1 and WO 2003/091,038A1. It is also possible, in transponder systems that are known per se and in which the transmission of the given identifying dataset takes place in time intervals that are separated from one another by pause sections, for the length of these pause sections to be used, in accordance with the present invention, as a selectable transmission parameter and, by using in each case a hash value that is generated in a transponder and a part of a stored distinguishing value that is laid down by means of the hash value, for this length to be selected or laid down. It has, however, proved particularly advantageous if, in addition, the features claimed, in the respective cases, in claim 2 and claim 7 are provided in the solutions according to the invention. A solution of this kind, where time slots in a sequence of time slots are used to assist, affords the important advantage that a solution that is simple in terms of circuitry becomes possible, which is very important for production in integrated technology. What is also achieved in this way and is an advantage is that great flexibility is obtained with regard to the transmission parameters that are selectable and thus with regard to the options for transmission, because it becomes possible for a very large number of selected transmission parameters, namely of time slots, to be provided, and for the selectable transmission parameters, i.e. the time slots, to be acted on, i.e. for certain time slots to be shortened or even suppressed, for example.

It has proved particularly advantageous in the solutions according to the invention if, in addition, the features that are claimed, in the respective cases, in claim 3 and claim 8 are provided in the solutions according to the invention. These solutions have proved to be advantageous with regard to construction that is as simple as possible in terms of circuitry. A further advantage is that this makes it possible to avoid what are termed deadlock situations, in which, as a result of adverse hash values, the situation may occur that at least two transponders cannot be placed in an inventory in a time-span of a desired length, or at all.

In the solutions according to the invention, it has proved particularly advantageous if, in addition, the features claimed, in the respective cases, in claims 4 and claim 9 are provided in the solutions according to the invention. Solutions of this kind can also be regarded as highly advantageous with respect to the avoidance of so-called deadlock situations.

However, in the solutions according to the invention, it has also proved particularly advantageous if, in addition, the features claimed, in the respective cases, in claim 5 and claim 10 are provided in the solutions according to the invention. What is achieved in this way and is an advantage is that there is a very high probability that a different starting hash value will be generated in each transponder that is in communicating connection with the communication station and consequently that different memory areas will be accessed for the purpose of reading out part of the distinguishing dataset and consequently that it is very highly probable that a different transmission parameter, i.e. a different time slot, will be laid down.

These and other aspects of the invention are apparent from and will be elucidated with reference to the embodiments described hereinafter, though the invention should not be considered as limited to these.

In the drawing:

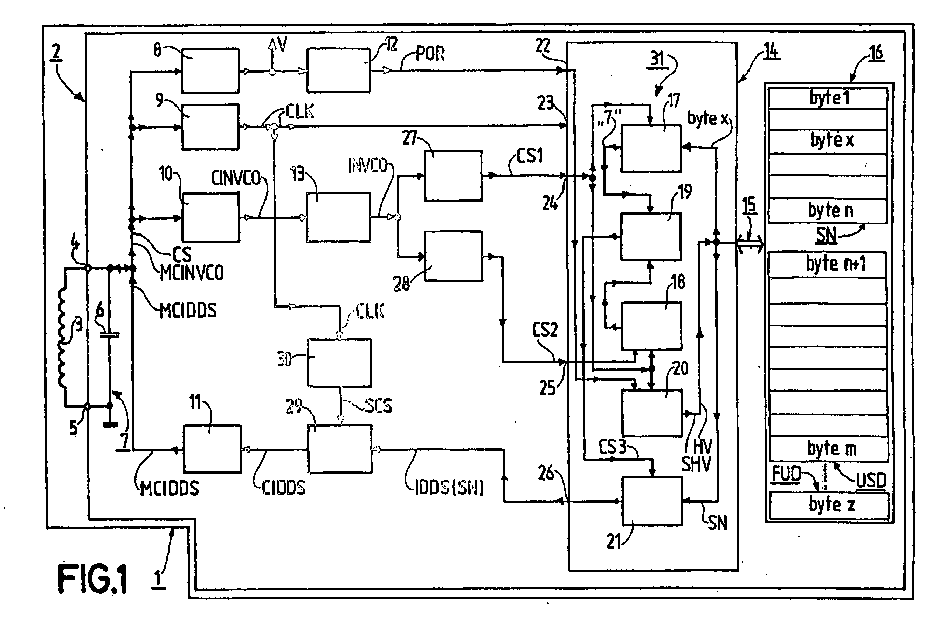

Fig. 1 is a schematic view in the form of a block circuit diagram of a part of a transponder and of an integrated circuit belonging to this transponder, which part is material in the present connection, in accordance with an embodiment of the invention.

Fig. 1 shows a transponder 1 that contains an integrated circuit 2 and is designed for contactless communication with a communication station (not shown). The transponder 1 is, for example, intended and designed for connection to a product, such as a video recorder, a television set, a tin of canned food or many other products available on the market, to enable such products to be recognized, i.e. identified, easily and for example to enable the said products to be further processed automatically.

For contactless communication with the communication station, the transponder 1 has a transmission coil 3 that is connected to terminals 4 and 5 of the integrated circuit 2. Connected to the transmission coil 3 is a capacitor 6 included in the integrated circuit 2, which capacitor 6 with the transmission coil 3 forms an oscillator circuit 7, which is tuned to an operating frequency that substantially matches the frequency of a carrier signal CS, which frequency arises in a transmission process. Rather than a transmission coil, a dipole may also be provided as a means of transmission, which is of advantage particularly when the transmission takes place in the high-frequency range, say in the MHz range or the GHz range. Means of transmission that operate capacitively may also be provided for contactless communication with the communication station.

A transmission of signals and commands to the transponder 1 takes place with the help of the carrier signal CS, which may be transmitted to the transponder 1 either unmodulated, or modulated, and preferably amplitude-modulated. A transmission of signal and commands from the transponder 1 to the communication station is performed by so-called load modulation of the unmodulated carrier signal CS emitted by the communication station.

Connected to the first terminal 4 of the integrated circuit 2 and thus to an oscillator circuit 7 are the circuits listed below, namely firstly a supply-voltage generating circuit 8, secondly a clock signal regenerating circuit 9, thirdly a demodulating circuit 10 and fourthly a modulating circuit 11.

By means of the supply-voltage generating circuit 8, there can be generated, by using the signals that are received by the oscillator circuit 7 and that can be picked off from the said oscillator circuit 7, a supply voltage V that is fed to all those components of the integrated circuit 2 which require the said supply voltage V. What is more, the supply voltage V is also fed to a power-on-reset circuit 12 by means of which a power-on-reset signal POR can be generated and emitted in a manner that has long been known, this power-on-reset signal POR being generated and emitted when a sufficiently high supply voltage V is available.

By means of the clock-signal regenerating circuit 9, a clock signal CLK can be regenerated that is available in the communication, station and that is transmitted to the transponder 1 with the help of the signals transmitted from the communication station to the transponder 1, which means that the regenerated clock signal CLK is available at the output of the clock-signal regenerating circuit 9. Rather than a clock-signal regenerating circuit 9 of this kind, what may also be provided is a clock-signal regenerating circuit that operates independently of the received signals, a provision that is made particularly when the communication between the communication station and the transponder 1 take place in the very high frequency range, namely in the MHz range or in the GHz range.

Modulated, encoded signals that are transmitted to the transponder 1 and are received by means of the transmission coil 3 can be demodulated with the help of the demodulating circuit 10. Reference will be made in the present case to a special signal, namely to a modulated, encoded inventory-making command MCINVCO. A plurality of other signals can of course also be demodulated with the help of the demodulating circuit 10, such as, say, a read command, a write command, an acknowledgement command, a switch-off command and many other commands. What are fed to the demodulating circuit 10 are thus modulated, encoded signals, such as, for example, the modulated, encoded inventory-making command MCINVCO and, having performed a demodulating operation, the demodulating circuits 10 emits an encoded signal, such as, for example, the encoded inventory-making command MCINVCO. The still encoded signal that has been demodulated in the given case, such as, for example, the encoded inventory-making command CINVCO, is fed to a decoding circuit 13 that is intended for decoding the encoded signals that are fed to it in the given case, such as, for example, the encoded inventory-making command CINVCO, which decoding circuit (13), after decoding has taken place, emits a decoded signal, such as, for example, the inventory-making command INVCO.

The inventory-making command INVCO is used to activate an inventory-making process in the course of a method of placing the transponder 1, or the integrated circuit 2 contained in the transponder 1, in an inventory in the communication station. To control the inventory-making process, the integrated circuit 2 includes process-controlling means, namely a process-controlling circuit 14, which is formed in the present case by a hard-wired logic circuit. The process-controlling circuit 14 may, however, also be implemented with the help of a microcomputer. Connected to the process-controlling circuit 14 via a connection 15 are storage means 16 contained in the integrated circuit 2. The storage means 16 are used to store a distinguishing dataset for the integrated circuit 2, or the transponder 1 containing the integrated circuit 2, which distinguishing dataset is characteristic of the integrated circuit 2 or the transponder 1 containing the integrated circuit 2, and for storing an identifying dataset for the integrated circuit 2 or the transponder 1 containing the integrated circuit 2, which identifying dataset is characteristic of the integrated circuit 2 or the transponder 1 containing the integrated circuit 2 and is intended for the placing in an inventory of the integrated circuit 2 or the transponder containing the integrated circuit 2. In the present case, the distinguishing dataset and the identifying dataset are the same and are formed by a serial number SN, which serial number SN, comprises n bytes, namely the bytes designated "byte 1", ...... "byte x", ........... "byte n".

Also stored in the storage means 16 is user data USD. The user data comprises a plurality of bytes, namely the bytes "byte n + 1, ....... "byte m". The user date USD may be data relating to the price of a product, manufacturer of a product, recommended use-by date of a product and much else besides.

Also stored in the storage means 16 is further data FUD, which further data FUD comprises further bytes, namely a continuation from the "byte m" byte mentioned above to the byte "byte z".

By means of the process-controlling circuit 14, a plurality of means and functions are implemented, of which only the ones that are material in the present case will be gone into in detail. The process-controlling circuit 14 contains a time-slot calculating stage 17, a time-slot counting stage 18, and a comparator stage 19 that cooperates with the time-slot calculating stage 17 and the time-slot counting stage 18. The process-controlling circuit 14 also contains a hash-value counting stage 20 and the process-controlling circuit 14 further contains an identifying-dataset generating stage 21. The tasks and manner of operation of the stages 17, 18, 19, 20 and 21 itemized above will be considered in detail below.

The power-on-rest signal POR can be fed to the process-controlling circuit 14 at an input 22, namely to perform a so-called power-on reset. What can also be fed to the process-controlling circuit 14, at an input 23, is the regenerated clock signal CLK, for the purpose of clocking the process-controlling circuit 14.

The process-controlling circuit 14 also has a further input 24, a further input 25 and an output 26, whose purpose will be considered in detail below. Connected upstream of the input 24 is a command-detecting circuit 27, which command-detecting circuit 27 is connected downstream of the decoding circuit 13. Commands emitted by the decoding circuit 13, such as, for example, the inventory-making command INVCO, can be recognized by means of the command-detecting circuit 27. If an inventory-making command INVCO of this kind is emitted by the decoding circuit 13 and fed to the command-detecting circuit 27, the result that this has is that the command-detecting circuit 27 emits a fist control signal CS1 and feeds it to the process-controlling circuit 14 via the input 24.

Connected upstream of the input 25 is a time-slot detecting circuit 28, which time-slot detecting circuit 28 is likewise connected downstream of the decoding circuit 13. Time slots that succeed one another in a time-slot sequence can be detected by means of the time-slot detecting circuit 28. In the present case, it is assumed that times-slots that succeed one another in time-slot sequence laid down by means of the communication station 1 are separated from one another by a separating-pulse sequence comprising a few short separating pulses. These sequences of separating pulse are used to detect the time slots. For this reason, the signals transmitted by the communication station to the transponder 1 and thus to the integrated circuit 2 are fed, after being demodulated and decoded, to the time-slot detecting circuit 28, which time-slot detecting circuit 28 detects the occurrence of the respective separating-pulse sequences and thus detects the time slot that succeeds a separating-pulse sequence in each case. Each time a separating-pulse sequence, and hence the time slot that succeeds the separating-pulse sequence that is detected in each case, is detected, the time-slot detecting circuit 28 emits a second control signal CS2, which is fed to the process-controlling circuit 14 via the input 25. It is, however, also possible for another solution to be provided, in which a time-slot sequence is started as a function of an inventory-making command INVCO and the time-slot sequence comprises time slots each of a fixed preset time-span, in which case a transfer is then made to the next time slot, and a second control signal CS2 is generated, on each occasion that the time span of a time slot expires. When this is the case, a synchronized switching on from one time slot to the next takes placed in all the transponders that are in communicating connection with the communication station.

Connected to the output 26 of the process-controlling circuit 14 is an encoding circuit 29 that is designed and intended to encode the signals fed to it. What is specified in the present case as a signal that can be fed to the encoding circuit 29 is the identifying dataset IDDS. Connected to the encoding circuit 29 is a secondary-carrier generating circuit 30, to which the clock signal CLK regenerated by means of the clock-signal regenerating circuit 9 is fed and by means of which a subcarrier signal SCS can be generated, which is fed to the encoding circuit 29. The secondary-carrier generating circuit 30 comprises essentially a frequency divider stage that has signal-shaping means connected downstream of it. In the encoding circuit 29, the signals fed to the encoding circuit 29, i.e. the identifying dataset IDDS for example, are encoded using the secondary carrier signal SCS, after which the encoding circuit 29 emits encoded signals, i.e. an encoded identifying dataset CIDDS, for example.

Connected downstream of the encoding circuit 29 is the modulating circuit 11, which is responsible for modulating the encoded signals fed to it, i.e. the encoded identifying dataset CIDDS and which, after the modulation, transmits modulated encoded signals, i.e. a modulated encoded identifying dataset MCIDDS for example, to the transmission coil 3 for transmission to the communication station.

The method of placing the transponder 1 or the integrated circuit 2 contained in the transponder 1 in an inventory in the communication station 1 will be described in detail below.

For activating an inventory-making process in the course of the method for placing the transponder 1 in an inventory, the communication station (not shown) emits the inventory-making command INVCO. To continue the sequence, the inventory-making process that is described below is performed. Even at this point it should be mentioned that the case may occur where the placing of the transponder 1 in an inventory has not happened once the inventory-making process that was previously activated has been performed, this having occurred because at least one other transponder transmitted its identifying dataset to the communication station 1 in the same time slot, which results in what is termed a clash, which was detected at the communication station 1. When this is the case, a fresh inventory-making process is activated and performed with the help of a further inventory-making commend INVCO emitted by the communications station.

After the emission of the inventory-making commend INVCO by the communication station, the inventory-making command INVCO is received by the transponder 1 and is recognized in the transponder 1 by means of the command-detecting circuit 27. As a result of this happening, the command-detecting circuit 27 transmits the first control signal CS1 to the input 24 of the process-controlling circuit 14. The first time slot is also detected by means of the time-slot detecting circuit 28. As a result of this happening, the time-slot detecting circuit 28 transmits the control signal CS2 to the input 25 of the process-controlling circuit 14.

The first control signal CS1 is fed to the time-slot calculating stage 17, the time-slot counting stage 18 and the hash-value counting stage 20. The second control signal CS2 is fed to the time-slot counting stage 18. The hash-value counting stage 20 had already had the power-on-reset signal POR fed to it before the first control signal CS1 was fed to it, which power-on-reset signal resulted in the count HV in the hash-value counting stage 20 being set to a starting hash value SHV. The feeding of the first control signal CS1 to the time-slot counting stage 18 results in the count in the time-slot counting stage 18 being set to a value of "0". As a result of the feeding of the second control signal CS2 to the time-slot counting stage 18, the count in the time-slot counting stage 18 is increased by a value of "1". The feeding of the first control signal CS 1 to the time-slot calculating stage 11 results in the time-slot calculating stage 18 being activated to calculate a time-slot number.

Once the count HV in the hash-value counting stage 20 has been set to the starting hash value SHV, the starting hash value SHV is fed to the storage means 16 via the connection 15. The starting hash value SHV forms in this case what is known as a pointer, which pointer marks a part of the distinguishing dataset, i.e. of the serial number SN. In the present case, it is assumed that the starting hash value SHV marks the byte "byte x". By using the starting hash value SHV, this results, in the present inventory-making process, in the "byte x" part of the serial number SN of the transponder 1 or of the integrated circuit 2 contained in the transponder 1 being read from the storage means 16 and being fed, via the connection 15, to the time-slot calculating stage 17. Using the "byte x" part of the serial number SN that has been read from the storage means 16, the time-slot calculating stage 17 calculates the number of a time slot, in which time slot the identifying dataset, i.e. the serial number SN, of the transponder 1 is to be transmitted to the communication station 1. In the present case, it is assumed that the time-slot calculating stage 17 calculates the number "7" by using "byte x", which means that the identifying dataset, i.e. the serial number SN, is to be transmitted from the transponder 1 to the communication station in the seventh time slot in the sequence of time slots. It should be mentioned that in the present case the time-slot sequence comprises a total of 256 time slots. It may, however, also contain only 128 time slots or some other number of time slots. The number "7" calculated by the time-slot calculating stage 17 is fed to the comparator stage 19. The comparator stage 19 also has the count contained in the time-slot counting stage 18, i.e. the value of "1", fed to it by the time-slot counting stage 18. This results in the comparator 19 finding an inequality in the values fed to it. This in turn results in the comparator stage 19 not transmitting a control signal to the identifying-dataset generating stage 12. To continue the inventory-making process, the time-slot detecting circuit 28 detects, one after another, the occurrences of the successive time slots, which results in the second control signal CS2 being generated and fed to the time-slot counting circuit 18 each time a fresh time slot occurs. This results in the count in the time-slot counting stage 18 being constantly raised by a value of "1". As soon as the count in the time-slot counting stage 18 reaches "7" and this count is fed to the comparator stage 19, this results in the comparator stage 19 finding that both the time-slot calculating stage 17 and the time-slot counting stage 18 are feeding a value of "7" to it, i.e. that the values being fed to it are the same, which results in the comparator stage 19 generating a third control signal CS3 and transmitting it to the identifying-dataset generating stage 21. This results in the identifying-dataset generating stage 21 being activated. This in turn results in the identifying dataset, i.e. the serial number SN, being read from the storage means 16 and being fed via the connection 15 to the identifying-dataset generating stage 21. In the identitying-dataset generating stage 21, the serial number SN is linked to security data, after which the identifying-dataset generating stage 21 then transmits the identifying dataset IDDS to the process-controlling circuit 14 via the output 26. As the process continues, the identifying dataset IDDS is fed to the encoding circuit 29 and is encoded by the encoding circuit 29 by using the secondary carrier signal SCS, which results in the encoded identifying dataset CIDDS being formed. The encoded identifying dataset CIDDS is fed to the modulating circuit 11, which is responsible for modulation and as the process continues transmits the modulated encoded identifying dataset MCIDDS to the transmission coil 3 for transmission to the communication station 1. It will be assumed that only the transponder 1 transmits its identifying dataset IDDS to the communication station 1 in the seventh time slot, thus enabling the communication station to detect this identifying dataset IDDS satisfactorily and hence take steps to have the identifying dataset IDDS processed, so that the transponder 1 can be placed in the inventory in the communication station.

If, however, the eventuality occurs that at least one other transponder has transmitted its identifying dataset IDDS to the communication station in the same time slot as the transponder 1 shown in Fig. 1, i.e., in the example being described in the time slot numbered "7", then there will be a clash between at least two identifying datasets IDDS received by the communication station, which is detected in the communication station and results in the communication station activating a fresh inventory-making process, which it does by emitting the inventory-making command INVCO again. This results in the command-detecting circuit 27 emitting a fresh first control signal CS1, which causes the count in the hash-value counting stage 20 to be increased by "1", which means that the count in the hash-value counting stage 20 is "SHV+1". The fresh occurrence of the first control signal CS1 also results in the count in the time-slot counting stage 18 being reset to a count of "1". This results in the byte designated "byte x + 1" being read from the storage means 16 due to the count of "SHV + 1" and being fed to the time-slot calculating stage 17 for the purpose of causing the number of the time slot to be calculated.

In the case being described here, it is assumed that after the occurrence of the power-on-rest signal POR, the same starting hash value SHV is set in the hash-value counting stage in all the transponders that are in communicating connection with the communication station. This need not necessarily be so, however, because it is also possible for, for example, a starting hash value SHV that is generated with a random number generator to be set in each transponder that is brought into communicating connection with the communication station.

What was described above was that the count in the hash-value counting stage 20 is increased by a value of "1" at each fresh occurrence of the first control signal CS 1. This need not necessarily be the case, and a solution may also be provided in which the count in the hash-value counting stage 20 is increased by a value of "1" only at every second, or only at every third, occurrence of the first control signal CS1.

In the transponder 1 or its integrated circuit 2, the time-slot calculating stage 17, the time-slot counting stage 18, the comparator stage 19 and the hash-value counting stage 20 form time-slot selecting means 31 that are designed to selected a time slot from the sequence of time slots, which selected time slot is suitable for transmitting the identifying dataset, i.e. the serial number SN, intending for placing the transponder 1 or its integrated circuit 2 in an inventory from the transponder or the integrated circuit 2 to the communication station. In other words, what this means is that the above-mentioned stages 17, 18, 19 and 20 form transmission-parameter selecting means - in the case being described here the time-slot selecting means 31 -, which transmission-parameter selecting means are designed to receive a part "byte x" of the distinguishing dataset, namely of the serial number SN, that is read from the storage means 16 by using a hash value HV, and to select a transmission parameter from a set of transmission parameters by using the "byte x" part of the distinguishing dataset (serial number SN) that is received. In this case, the selected transmission parameter, i.e. the selected time slot, is suitable for the transmission from the transponder 1 or its integrated circuit 2 to the communication station of the identifying dataset (serial number SN) intended for the placing of the transponder 1 or its integrated circuit 2 in an inventory.

It should be mentioned that other transmission-parameter selecting means may also be provided in a transponder according to the invention, in which case a transmission parameter is then selected from a preset set of transmission parameters as a function of a hash value. Transmission-parameter selecting means may, for example, select a secondary carrier signal as a function of a hash value and as a function of a "byte x" part of the distinguishing dataset (serial number SN), in which case the secondary-carrier generating circuit 30 is then designed to generate a plurality of secondary carrier signals that differ in respect of the secondary-carrier frequency, and the transmission-parameter selecting means exert a controlling action in the secondary-carrier-signal generating circuit 30 to cause a subcarrier signal of a given frequency, that has been selected at the time, to be selected and to be fed to the encoding circuit 29. It is also possible for an encoding circuit 29 to be provided with which it is possible for types of encoding that differ in respect of their encoding rules to be performed, in which case transmission-parameter selecting means, i.e. encoding selecting means, will then cooperate in a controlling manner with an encoding circuit of this kind. These encoding selecting means will than perform a given kind of encoding as a function of a hash value HV and as a function of a "byte x" part of the distinguishing dataset (serial number SN).

In all the variant embodiments of a transponder according to the invention or an integrated circuit according to the invention that have been described above, the substantial advantage exists that the hash-value generating means are contained in the transponder or its integrated circuit, which means that the generation of the hash value that is required in a transponder or in its integrated circuit can be performed in the transponder or its integrated circuit itself, so there is no need for a hash value of this kind to be transmitted from a communication station to the transponder.

## Claims

1. A method of placing a transponder (1) or an integrated circuit (2) contained in the transponder (1) in an inventory the method comprising an inventory-making process which is activated in the transponder (1) or in its integrated circuit (2), in which inventory-making process a part (byte x) of a distinguishing dataset (SN) of the transponder or its integrated circuit, which distinguishing dataset (SN) is stored in storage means (16) of the transponder or its integrated circuit and is characteristic for the transponder or its integrated circuit, is read from the storage means (16) by using a hash value (HV), and in which inventory-making process a transmission parameter ("7") is selected from a set of transmission parameters by using the part (byte x) that was read from the distinguishing dataset (SN), and in which inventory-making process an identifying dataset (SN) for the transponder or its integrated circuit, which identifying dataset (SN) is characteristic for the transponder or its integrated circuit and is adapted for the placing of the transponder or its integrated circuit in an inventory, is transmitted from the transponder or its integrated circuit to a communication station by using the selected transmission parameter ("7), **characterized in that** the hash value (HV) is generated in the transponder (1) or in its integrated circuit (2) by means of hash-value generating means (20) that are provided in the transponder (1) or in its integrated circuit (2).

2. A method as claimed in claim 1, **characterized in that**, in the inventory-making process, a time slot ("7") is selected from a time-slot sequence by using the part (byte x) of the distinguishing dataset (SN) that has been read out, and **in that**, in the inventory-making process, the identifying dataset (SN) for the transponder (1) or its integrated circuit (2) is transmitted from the transponder or its integrated circuit to the communication station by using the selected time slot ("7").

3. A method as claimed in claim 1, **characterized in that** the hash value (HV) is generated by means of a hash-value counting stage (20) provided in the transponder (1) or in its integrated circuit (2).

4. A method as claimed in claim 3, **characterized in that** the hash-value counting stage (20) is set to a preset starting hash value (SHV) after a power-on reset in the transponder (1) or in its integrated circuit (2).

5. A method as claimed in claim 1, **characterized in that** the hash value (HV) is generated by means of a random number generator provided in the transponder (1) or in its integrated circuit (2).

6. An integrated circuit (2) for a transponder (1), which integrated circuit (2) contains process-controlling means (14) that are adapted for controlling an inventory-making process for placing the integrated circuit or the transponder containing the integrated circuit in an inventory in a communication station, and which integrated circuit (2) contains storage means (16) that are adapted firstly to store a distinguishing dataset (SN) of the integrated circuit (2) or the transponder containing the integrated circuit (2), which distinguishing dataset (SN) is characteristic for the integrated circuit or the transponder containing the integrated circuit, and secondly to store an identifying dataset (SN) of the integrated circuit or the transponder containing the integrated circuit, which identifying dataset (SN) is characteristic for the integrated circuit or the transponder containing the integrated circuit and is adapted for placing the integrated circuit or the transponder containing the integrated circuit in an inventory, and which integrated circuit (2) includes transmission-parameter selecting means (31) that are adapted firstly to receive a part (byte x) of the distinguishing dataset (SN) that is read from the storage means (16) by using the hash value (HV), and secondly to select a transmission parameter ("7") from a set of transmission parameters by using the part (byte x) of the distinguishing dataset (SN) that has been received, which selected transmission parameter ("7") is suitable for transmitting, from the integrated circuit to the communication station, the identifying dataset (SN) that is adapted for placing the integrated circuit or the transponder containing the integrated circuit in an inventory, **characterized in that** hash-value generating means (20) for generating the hash value (HV) are provided in the integrated circuit (2).

7. A circuit (2) as claimed in claim 6, **characterized in that** the integrated circuit (2) contains, as transmission-parameter selecting means (31), time-slot selecting means (31), which time-slot selecting means (31) are designed to select a time slot ("7") from a time-slot sequence, which selected time slot ("7") is suitable for transmitting, from the integrated circuit (2) to the communication station, the identifying dataset (SN) intended for the placing of the integrated circuit (2) or the transponder (1) containing the integrated circuit (2) in an inventory.

8. A circuit (2) as claimed in claim 6, **characterized in that** the hash-value generating means (20) provided in the integrated circuit (2) are implemented with the help of a hash-value counting stage (20).

9. A circuit (2) as claimed in claim 8, **characterized in that** a power-on reset circuit (12) is provided that is designed to generate a power-on-reset signal (POR) at a power-on reset and that cooperates with the hash-value counting stage (20), and **in that** the hash-value counting stage (20) can be set to a starting hash value (SHV) by means of the power-on-reset signal (POR).

10. A circuit (2) as claimed in claim 6, **characterized in that** the hash-value generating means (20) provided in the integrated circuit (2) are implemented with the help of a random number generator.

11. A transponder (1), **characterized in that** the transponder (1) is provided with an integrated circuit (2) as claimed in any of claims 6 to 10.

## Patentansprüche

1. Verfahren zum Platzieren eines Transponders (1) oder eines in dem Transponder (1) enthaltenen integrierten Schaltkreises (2) in einem Inventar, wobei das Verfahren einen Inventarisierprozess aufweist, welcher in dem Transponder (1) oder in dessen integriertem Schaltkreis (2) aktiviert ist,
in welchem Inventarisierprozess ein Teil (byte x) von einem unterscheidenden Datensatz (SN) des Transponders oder dessen integrierter Schaltkreis aus dem Speichermittel (16) mittels Verwendens eines Hash-Wertes (HV) gelesen wird, welcher unterscheidende Datensatz (SN) in Speichermittel (16) des Transponders oder dessen integriertem Schaltkreis gespeichert ist und charakteristisch für den Transponder oder dessen integrierter Schaltkreis ist,
und in welchem Inventarisierprozess ein Übertragungsparameter ("7") aus einem Satz von Übertragungsparametem ausgewählt wird mittels Verwendens des Teils (byte x), welcher aus dem unterscheidenden Datensatz (SN) gelesen wurde,
und in welchem Inventarisierprozess ein identifizierender Datensatz (SN) für den Transponder oder dessen integrierter Schaltkreis von dem Transponder oder dessen integriertem Schaltkreis an eine Kommunikationsstation mittels Verwendens des ausgewählten Übertragungsparameters ("7") übertragen wird, welcher identifizierende Datensatz (SN) für den Transponder oder dessen integrierter Schaltkreis charakteristisch ist und für das Platzieren des Transponders oder dessen integriertem Schaltkreis in einem Inventar eingerichtet ist,
**dadurch gekennzeichnet, dass** der Hash-Wert (HV) in dem Transponder (1) oder in dessen integriertem Schaltkreis (2) mittels Hash-Wert-Generierungsmittel (20) generiert wird, welche in dem Transponder (1) oder in dessen integriertem Schaltkreis (2) bereitgestellt werden.

2. Verfahren gemäß Anspruch 1, **dadurch gekennzeichnet,**
**dass** in dem Inventarisierprozess ein Zeit-Slot ("7") aus einer Zeit-Slot-Sequenz ausgewählt wird mittels Verwendens des Teils (byte x) des unterscheidenden Datensatzes (SN), welcher ausgelesen wurde, und
**dass** in dem Inventarisierprozess der identifizierende Datensatz (SN) für den Transponder (1) oder dessen integrierter Schaltkreis (2) von dem Transponder oder dessen integriertem Schaltkreis an die Kommunikationsstation mittels Verwendens des ausgewählten Zeit-Slots ("7") übertragen wird.

3. Verfahren gemäß Anspruch 1, **dadurch gekennzeichnet, dass** der Hash-Wert (HV) generiert wird mittels einer Hash-Wert-Zählstufe (20), welche in dem Transponder (1) oder in dessen integriertem Schaltkreis (2) bereitgestellt wird.

4. Verfahren gemäß Anspruch 3, **dadurch gekennzeichnet, dass** die Hash-Wert-Zählstufe (20) auf einen vorgegebenen Start-Hash-Wert (SHV) nach einem Einschalt-Reset in dem Transponder (1) oder in dessen integriertem Schaltkreis (2) gesetzt wird.

5. Verfahren gemäß Anspruch 1, **dadurch gekennzeichnet, dass** der Hash-Wert (HV) generiert wird mittels eines Zufallszahlengenerators, welcher in dem Transponder (1) oder in dessen integriertem Schaltkreis (2) bereitgestellt wird.

6. Integrierter Schaltkreis (2) für einen Transponder (1),
welcher integrierte Schaltkreis (2) Prozess-Steuer-Mittel (14) enthält, welche eingerichtet sind, um einen Inventarisierprozess zum Platzieren des integrierten Schaltkreises oder des den integrierten Schaltkreis enthaltenden Transponders in einem Inventar in einer Kommunikationsstation zu steuern, und
welcher integrierte Schaltkreis (2) Speichermittel (16) enthält, welche eingerichtet sind, um erstens einen unterscheidenden Datensatz (SN) des integrierten Schaltkreises (2) oder des den integrierten Schaltkreis (2) enthaltenden Transponders zu speichern, welcher unterscheidende Datensatz (SN) für den integrierten Schaltkreis oder den den integrierten Schaltkreis enthaltenden Transponder charakteristisch ist, und um zweitens einen identifizierenden Datensatz (SN) des integrierten Schaltkreises oder des den integrierten Schaltkreis enthaltenden Transponders zu speichern, welcher identifizierende Datensatz (SN) für den integrierten Schaltkreis oder den den integrierten Schaltkreis enthaltenden Transponder charakteristisch ist und eingerichtet ist zum Platzieren des integrierten Schaltkreises oder des den integrierten Schaltkreis enthaltenden Transponders in einem Inventar, und
welcher integrierte Schaltkreis (2) Übertragungsparameter-Auswählmittel (31) beinhaltet, welche eingerichtet sind, um erstens einen Teil (byte x) des unterscheidenden Datensatzes (SN) zu empfangen, welcher aus den Speichermitteln (16) mittels Verwendens des Hash-Wertes (HV) gelesen wird, und um zweitens einen Übertragungsparameter ("7") von einem Satz von Übertragungsparametern auszuwählen mittels Verwendens des Teils (byte x) des unterscheidenden Datensatzes (SN), welcher empfangen wurde, welcher ausgewählte Übertragungsparameter ("7") geeignet ist, den identifizierenden Datensatz (SN), welcher eingerichtet ist, den integrierten Schaltkreis oder den den integrierten Schaltkreis enthaltenden Transponder in einem Inventar zu platzieren, von dem integrierten Schaltkreis zu der Kommunikationsstation zu übertragen,
**dadurch gekennzeichnet, dass** die Hash-Wert-Generierungsmittel (20) zum Generieren des Hash-Wertes (HV) in dem integrierten Schaltkreis (2) bereitgestellt sind.

7. Schaltkreis (2) gemäß Anspruch 6, **dadurch gekennzeichnet, dass** der integrierte Schaltkreis (2) als Übertragungsparameter-Auswählmittel (31) Zeit-Slot-Auswählmittel (31) enthält, welche Zeit-Slot-Auswählmittel (31) ausgebildet sind, um einen Zeit-Slot ("7") aus einer Zeit-Slot-Sequenz auszuwählen, welcher ausgewählte Zeit-Slot ("7") geeignet ist, um den identifizierenden Datensatz (SN), welcher dazu vorgesehen ist, den integrierten Schaltkreis (2) oder den den integrierten Schaltkreis (2) enthaltenden Transponder (1) in einem Inventar zu platzieren, von dem integrierten Schaltkreis (2) an die Kommunikationsstation zu übertragen.

8. Schaltkreis (2) gemäß Anspruch 6, **dadurch gekennzeichnet, dass** die in dem integrierten Schaltkreis (2) bereitgestellten Hash-Wert-Generierungsmittel (20) mit der Hilfe einer Hash-Wert-Zählstufe (20) implementiert sind.

9. Schaltkreis (2) gemäß Anspruch 8, **dadurch gekennzeichnet,**
**dass** ein Einschalt-Reset Schaltkreis (12) bereitgestellt ist, welcher ausgebildet ist, um ein Einschalt-Reset Signal (POR) bei einem Einschalt-Reset zu generieren und welcher mit der Hash-Wert-Zählstufe (20) kooperiert, und
**dass** die Hash-Wert-Zählstufe (20) mittels des Einschalt-Reset Signals (POR) zu einem Start-Hash-Wert (SHV) gesetzt werden kann.

10. Schaltkreis (2) gemäß Anspruch 6, **dadurch gekennzeichnet, dass** die in dem integrierten Schaltkreis (2) bereitgestellten Hash-Wert-Generiermittel (20) mit der Hilfe von einem Zufallszahlgenerator implementiert sind.

11. Transponder (1), **dadurch gekennzeichnet, dass** der Transponder (1) mit einem integrierten Schaltkreis (2) wie in einem der Ansprüche 6 bis 10 beansprucht, bereitgestellt ist.

## Revendications

1. Procédé de placement d'un transpondeur (1) ou d'un circuit intégré (2) contenu dans le transpondeur (1) dans un élément d'inventaire, le procédé comprenant un processus de réalisation d'inventaire qui est activé dans le transpondeur (1) ou dans son circuit intégré (2), dans lequel processus d'inventaire une partie (octet x) d'un groupe de données caractéristique (SN) du transpondeur ou de son circuit intégré, lequel groupe de données caractéristique (SN) est stocké dans des moyens de stockage (16) du transpondeur ou de son circuit intégré et est caractéristique du transpondeur ou de son circuit intégré, est lue à partir des moyens de stockage (16) grâce à une valeur de hachage (HV), et dans lequel processus d'inventaire un paramètre de transmission ("7") est sélectionné à partir d'un ensemble de paramètres de transmission à l'aide de la partie (octet x) qui a été lue à partir du groupe de données caractéristiques (SN), et dans lequel processus d'inventaire un groupe de données d'identification (SN) pour le transpondeur ou son circuit intégré, lequel groupe de données d'identification (SN) est caractéristique du transpondeur ou de son circuit intégré et est agencé de manière à placer le transpondeur ou son circuit intégré dans un élément d'inventaire, est transmis du transpondeur ou de son circuit intégré vers une station de communication en utilisant le paramètre de communication sélectionné ("7"), **caractérisé par le fait que** la valeur de hachage (HV) est générée dans le transpondeur (1) ou dans son circuit intégré (2) à l'aide de moyens de génération de valeur de hachage (20) qui sont disposés dans le transpondeur (1) ou dans son circuit intégré (2).

2. Procédé selon la revendication 1, **caractérisé par le fait que** dans le processus d'inventaire, un intervalle de temps ("7") est sélectionné à partir d'une séquence d'intervalle de temps à l'aide de la partie (octet x) du groupe de données caractéristique (SN) qui a été lu, et **par le fait que**, lors du processus d'inventaire, le groupe de données d'identification (SN) pour le transpondeur (1) ou son circuit intégré (2) est transmis à partir du transpondeur ou de son circuit intégré vers la station de communication en utilisant l'intervalle de temps ("7").

3. Procédé selon la revendication 1, **caractérisé par le fait que** la valeur de hachage (HV) est générée au moyen d'un étage de comptage de valeur de hachage (20) disposé dans le transpondeur (1) ou dans son circuit intégré (2).

4. Procédé selon la revendication 3, **caractérisé par le fait que** l'étage de comptage de valeur de hachage (20) est initialisé à une valeur de hachage initiale (SHV) après la remise à zéro de mise en marche dans le transpondeur (1) ou dans son circuit intégré (2).

5. Procédé selon la revendication 1, **caractérisé par le fait que** la valeur de hachage (HV) est générée au moyen d'un générateur de nombre aléatoire disposé dans le transpondeur (1) ou dans son circuit intégré (2).

6. Circuit intégré (2) pour un transpondeur (1), lequel circuit intégré (2) contient des moyens de contrôle de processus (14) qui sont agencés de manière à contrôler un processus d'inventaire pour placer le circuit intégré ou le transpondeur contenant le circuit intégré dans un élément d'inventaire dans une station de communication, et lequel circuit intégré (2) contient des moyens de stockage (16) qui sont agencés de manière à stocker premièrement un groupe de données caractéristique (SN) du circuit intégré (2) ou du transpondeur contenant le circuit intégré (2), lequel groupe de données caractéristique (SN) est caractéristique du circuit intégré ou du transpondeur contenant le circuit intégré, et de manière à stocker deuxièmement un groupe de données d'identification (SN) du circuit intégré ou du transpondeur contenant le circuit intégré, lequel groupe de données d'identification (SN) est caractéristique du circuit intégré ou du transpondeur contenant le circuit intégré et est agencé de manière à placer le circuit intégré ou le transpondeur contenant le circuit intégré dans un élément d'inventaire, et lequel circuit intégré (2) contient des moyens de sélection de paramètre (31) qui sont agencés premièrement pour recevoir une partie (octet x) du groupe de données caractéristique (SN) qui est lu à partir des moyens de stockage (16) à l'aide d'une valeur de hachage (HV), et deuxièmement pour sélectionner un paramètre de transmission ("7") à partir d'un ensemble de paramètres de transmission à l'aide de la partie (octet x) du groupe de données caractéristique (SN) qui a été reçu, lequel paramètre de transmission sélectionné ("7") convient pour une transmission, du circuit intégré vers la station de communication, le groupe de données d'identification (SN) étant agencé pour le placement du circuit intégré ou du transpondeur contenant le circuit intégré dans un élément d'inventaire, **caractérisé par le fait que** ces moyens de génération de valeur de hachage (20) pour générer la valeur de hachage (HV) sont disposés dans le circuit intégré (2).

7. Circuit (2) selon la revendication 6, **caractérisé par le fait que** le circuit intégré (2) contient, en tant que moyens de sélection de paramètre de transmission (31), des moyens de sélection d'intervalle de temps (31), lesquels moyens de sélection d'intervalle de temps (31) sont conçus pour sélectionner un intervalle de temps("7") à partir d'une séquence d'intervalle de temps, lequel intervalle de temps sélectionné ("7") convient pour la transmission, du circuit intégré (2) vers la station de communication, du groupe de données d'identification (SN) destiné au placement du circuit intégré (2) ou du transpondeur (1) contenant le circuit intégré (2) dans un élément d'inventaire.

8. Circuit intégré (2) selon la revendication 6, **caractérisé par le fait que** les moyens de génération de valeur de hachage (20) disposés dans le circuit intégré (2) sont réalisés à l'aide d'un étage de comptage de valeur de hachage (20).

9. Circuit intégré (2) selon la revendication 8, **caractérisé par le fait qu'**est disposé un circuit de remise à zéro lors de la mise en marche (12) qui est conçu pour générer un signal de remise à zéro lors de la mise en marche (POR) lors de la remise à zéro à la mise en marche et qui coopère avec l'étage de comptage de valeur de hachage (20), et dans lequel l'étage de comptage de valeur de hachage (20) peut être initialisé à une valeur de hachage initiale (SHV) grâce au signal de remise à zéro lors de la mise en marche (POR).

10. Circuit (2) selon la revendication 6, **caractérisé par le fait que** les moyens de génération de valeur de hachage (20) disposés dans le circuit intégré (2) sont réalisés à l'aide d'un générateur de nombre aléatoire.

11. Transpondeur (1), **caractérisé par le fait que** le transpondeur (1) est muni d'un circuit intégré (2) selon l'une quelconque des revendications 6 à 10.
